# EUROPEAN PATENT SPECIFICATION

(11) **EP 2 839 228 B1**
(45) Date of publication and mention of the grant of the patent: **03.10.2018**
(21) Application number: 13716297.0
(22) Date of filing: 15.04.2013
(51) Int. Cl.: B29C 39/00, B29C 39/26, F25D 23/06, B29K 75/00

(54) **COOLING DEVICE WITH HOLDING PROTRUSION AND METHOD OF PRODUCING IT**
KÜHLVORRICHTUNG MIT HALTEVORSPRUNG UND VERFAHREN ZUR FERTIGUNG DESSELBEN
DISPOSITIF DE REFROIDISSEMENT AVEC PROTUBÉRANCE DE MAINTIEN ET MÉTHODE DE FABRICATION DU MÊME

(30) Priority: 16.04.2012 TR 201204358
(43) Date of publication of application: 25.02.2015
(73) Proprietor: BSH Hausgeräte GmbH, 81739 München (DE)
(72) Inventor: DEMIRÖZ, Taha, 59850 Tekirdag (TR); YILDIZGÖCER, Tanzer, 59850 Corlu (TR); ÖZSOY, Yalcin, 59510 Cerkezköy (TR)
(86) International application number: PCT/EP2013/057836
(87) International publication number: WO 2013/156449

(56) References cited:
- CN-U- 201 844 651
- DE-A1-102009 027 892
- US-A- 2 291 547
- US-A- 4 359 165

## Description

### TECHNICAL FIELD

The invention relates to assemblies used in cooling appliances having a thermally insulated body particularly to fix the compartments that are configured on the opposite lateral walls of a housing within a refrigerator body and are in the form of shelves or drawers, and their production method.

### STATE OF ART

Cooling devices have compartments like shelves or drawers, which are installed at certain intervals in a housing of a thermally insulated body. The shelves or drawers are placed by settling on holding protrusions configured in the lateral walls of a housing. Both opposite edges of the shelves or drawers are in contact with the planar surface of the holding protrusions. Thereby the holding protrusions hold the compartments within the housing in a certain position. As there are holding protrusions parallel to each other and configured in a large number, more than one shelf or drawer can be installed at certain intervals in the housing in parallel to each other. During the manufacturing of the housing of the cooling device with polyurethane and molding with thermoforming process, the holding protrusions is configured integrally in the lateral walls. The holding protrusions can be of different forms with each other. For example, in the front portion of the lateral wall close to the door the holding protrusion in lateral D form and after a gap left between them, another holding protrusion in the form of a thin and long protrusion extending backwards is configured.

In the patent application number TR201111817, the invention is a cooling device comprising a thermally insulated receptacle having two opposite lateral walls; at least one holding extension positioned on the lateral walls in mutually opposite manner, a compartment having a sliding adjusting element seated over the holding extensions at a carrying surface and movable in a transversal direction. The cooling device comprises at least one compression extension having a front surface facing a lateral surface of the compartment and extending towards the compartment lateral surface adjacently to the carrying surface so as to be shorter than the carrying extension.

The patent publication number US5642924 refers to a shelf system configured for a cooling cabin. It is a cooling cabin having a rear wall and lateral walls with multiple shelf supports mounted on each lateral wall. A hanging bracket is mounted on the rear wall, the bracket is adapted in such a manner that it supports an edge of a half shelf bend with multiple different heights. Each shelf support comprises a supporting rail having a rear part and a front part separated with a space. The front part prevents the shelf from waggling in the supporting rail.

The US 2291547 describes a cabinet construction for a refrigerating apparatus. This cabinet construction comprises a supporting member connected with a wall of a cabinet to provide a horizontal support for a shelf to support the shelf in sliding relation to a wall and a second support capable of supporting said shelf in either slidable or non-slidable relation to said wall.

### SHORT DESCRIPTION OF THE INVENTION

The object of the invention is to reduce in cooling devices the wall thickness of the housing within the body of the cooling device.

In order to obtain said object, the invention provides a cooling device as claimed in claim 1.

According to the invention, the groove is in the portion of the backing part close to its end. So the amount of polyurethane material used in thermal insulation, filled in the inner volume of the holding protrusion is reduced. As the amount of polyurethane per unit volume is low, no or few gaps are formed.

According to the invention, the holding protrusion is in a form similar to a lateral D letter, especially viewed in a horizontal plane orientated parallel to a plane of a compartment. So the compartments in the form of shelves or drawers are supported also by being held at the front part of the lateral walls.

In a preferred configuration of the invention, the edges of the holding protrusion are radiused. So as the amount of polyurethane per unit volume is low because the surface at the radiused edges becomes tight, no or few gaps are formed.

In a configuration according to the present invention, the grooves configured in the backing part of the holding protrusion are parallel to each other. So through more than one groove parallel to each other the amount of polyurethane filled in the inner volume of the holding protrusion is low.

In a preferred configuration of the invention, the distance between the grooves configured in the backing part of the holding protrusion is equal to each other. So a regular form is obtained. In a preferred embodiment the grooves are bounded by S-shaped cross-ties. Especially the cross-ties extend in a direction substantially perpendicular to the lateral wall and parallel to each other. According to the invention the cross-ties extend form the lateral wall to the free edge of the D-shaped holding protrusion. Thus mechanical stability of the protrusion is increased.

In a preferred embodiment a holding protrusion device on a specific horizontal insertion plane for a compartment comprises at least two elements, the first holding protrusion and a second holding protrusion, on a lateral wall which are separate parts, and which are positioned with a distance to each other, and consecutively in a row. The second holding protrusion is preferred an oblong element, positioned closer to a back wall of the housing than the first holding protrusion. The first holding protrusion is preferred short in comparison to the second holding protrusion and is positioned close to a front edge of the housing.

In order to obtain said object the invention, it is the production method of a cooling device, which comprises the process steps of placing a plastic panel over the mold so as to generate the holding protrusion form of the housing, molding the panel and then removing it from the mold coaxially with the groove extension direction. So instead of a plastic plate with the normally used optimum wall thickness in which the housing and the holding protrusions on the housing are formed, a plastic plate with a thinner wall thickness can be used.

### DESCRIPTION OF THE FIGURES

Figure 1 is a perspective front view of a cooling device housing having holding protrusions subject of the invention.
Figure 1a is a perspective bottom view of the holding protrusions taken from Figure 1 that are subject matter of the invention, the backing part of which has a grooved structure.
Figure 2 is a perspective view of the holding protrusion mold adapted as part of the housing mold to more than one point of the mold.
Figure 3 is a front view of the holding protrusion mold formed as part of the housing mold on more than one point of the mold.
Figure 3a is a view of section A-A taken transversally from the holding protrusion mold given in figure 3.

### REFERENCE NUMBERS

1 Body
10 Housing
100 Lateral wall
2 Compartment
3 First Holding protrusion
31 Planar section
32 Backing part
321 Groove
322 Cross-tie
33 End
4 Mold
41 Recess
42 Projection
5 Protrusion Device
6 Second Holding Protrusion

### DETAILED DESCRIPTION OF THE INVENTION

The invention relates to holding protrusions 3 in cooling appliances having a thermally insulated body 1, that are configured on the opposite lateral walls 100 of a housing 10 within a body 1 and are formed with grooves 321 for carrying the compartments 2 in the form of shelves or drawers, and their production method. The grooves 321, especially each, are bounded by cross-ties 322, especially S-shaped cross ties 322. The cross ties 322 extend in a direction substantially perpendicular to the lateral wall 100 and parallel to each other and extend form the lateral wall 100 to the front edge of the D-shaped protrusion 3.

A holding protrusion device 5 on a specific horizontal insertion plane for a compartment 2 comprises at least two elements, the first holding protrusion 3 and a holding second protrusion 6, on a lateral wall 100 which are separate parts, and which are positioned with a distance to each other, and consecutively in a row. The second protrusion 6 is an oblong element, positioned close to a back wall of the housing 10. The first protrusion 3 is short in comparison to the second protrusion 6 and is positioned close to a front edge of the housing 10.

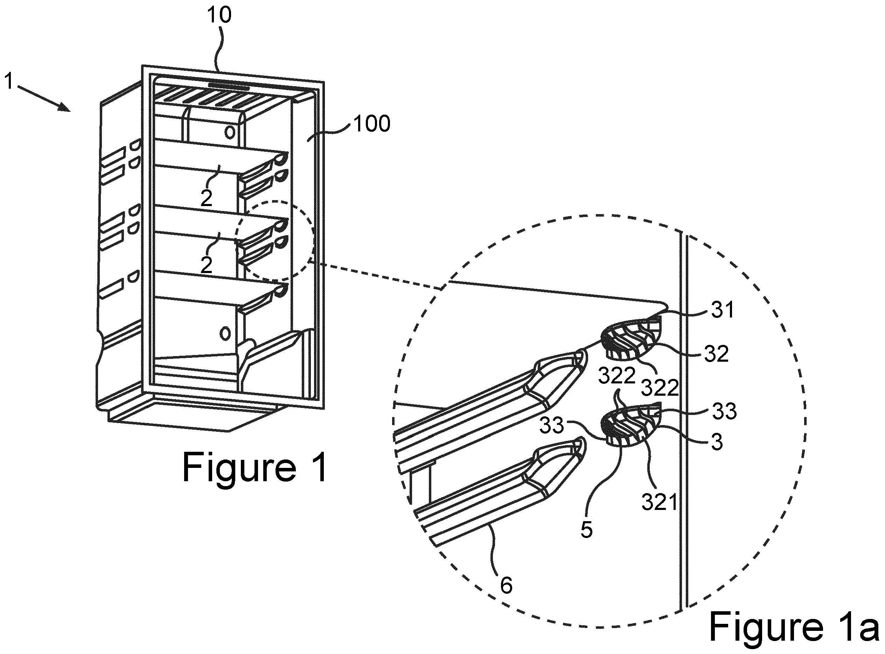

In figure 1, a perspective front view is given of a cooling device housing 10 having holding protrusions 3 subject of the invention. In figure 1a, a perspective bottom view is given of the holding protrusions 3 taken from figure 1 that are subject matter of the invention, the backing part 32 of which has a grooved structure with said grooves 321. The holding protrusion 3 as can be seen in the figure, is in a form similar to a lateral D letter, especially viewed in a plane parallel to the plane of the compartment 2. The planar section 31 is formed in the upper part of the holding protrusion 3 and the backing part 32 is formed in its lower part. The planar section 31 is the portion being in contact while carrying the compartment 2.

The housing 10 of the cooling device is obtained by casting generally polyurethane material in the mold. On the lateral walls 100 of the housing 10, holding protrusions 3 are configured. As given in the close view in figure 1a, the grooves 321 are formed in the backing part 32 of the holding protrusion 3. The manufacturing mold of the housing 10 is in a protruding 42 form such that it allows obtaining the grooved form of the holding protrusion 3. Therefore the holding protrusion mold 4 is configured and used integrally as a part of the housing 10 mold. A recess 41 is configured on the mold 4 to form the holding protrusion 3 and projections 42 parallel to each other are configured to form the grooves 321. When the polyurethane material is cast in the mold, the grooved structure forms in the backing part 32 of the holding protrusion 3 and the mold 4 is completely and uniformly filled with polyurethane material. When the housing 10 is removed from the mold, holding protrusions 3 with rigid structure are obtained. Even if the wall thickness of the housing 10 is reduced, the rigidity of the holding protrusions 3 is generated by the grooved form. The grooves 321 on the holding protrusions 3 extend parallelly to each other on the backing part 32 and perpendicularly to the lateral wall 100.

As can be seen in figure 1, the holding protrusions 3 are configured oppositely at the inner facing sides of the lateral walls 100 of the housing 10. They can be one under the other, parallel to each other and in a large number. Thereby the shelves and drawers can be installed at desired distances in the housing 10. When a shelf or a drawer is placed on the holding protrusion 3, the groove form provides also the resistance of the holding protrusion 3 against load.

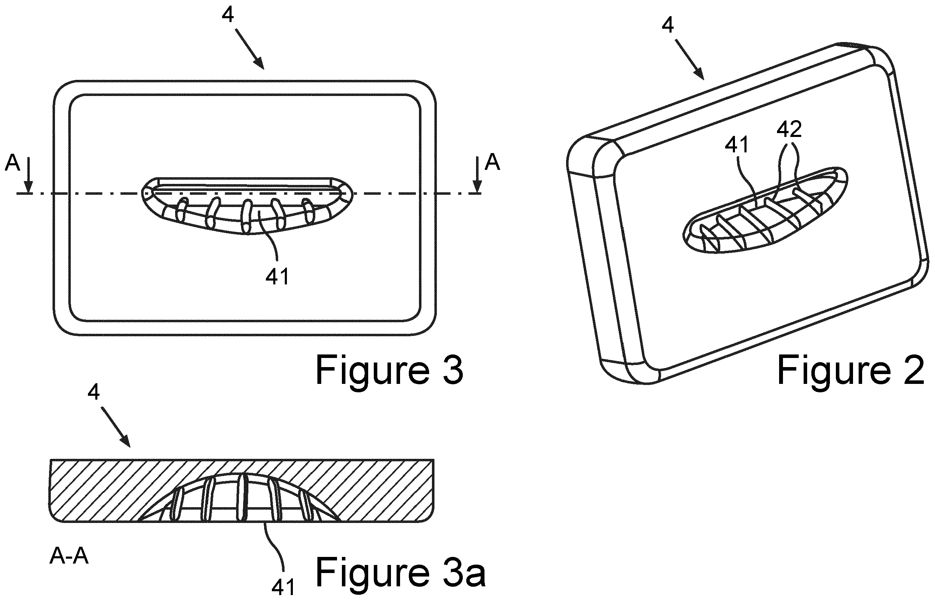

In figure 2, a perspective view is given of the holding protrusion mold 4 used in more than one of its place as part of the housing 10 mold. The portion in which the holding protrusion 3 is formed is in the form of a recess 41 (figure 2, 3, 3a). The recess 41 resembles a lateral D letter. It has a certain volume. In this volume, the holding protrusion 3 is formed with material casting. The holding protrusion 3 has on its both sides ends 33, the corners of which are in rounded form. Figure 3a is a view of section A-A taken transversally from the holding protrusion mold 4 given in figure 3. From here, the depth of the recess 41 formed in the inner wall of the mold 4 can be seen.

Instead of a plastic plate with the normally used optimum wall thickness in which the housing 10 and the holding protrusions 3 on the housing 10 are formed, a plastic plate with a thinner wall thickness can be used.

During the production of the cooling device, during the filling with polyurethane of the volume between the body 1 and the housing 10 air gaps occur due to gas compressions. And in even surfaces there are crushings over time with the action of the air gaps. Through the grooved form of the holding protrusion 3 as the polyurethane material with gaps entering the inner volume will be reduced, there will be no or an insignificant amount of crushing.

In an alternative configuration of the invention at the back of the holding protrusions 3, the end portions 33 of other holding protrusions 3 formed as an oblong protuberance flush with the holding protrusions 3 in a lateral D form configured on the lateral walls 100 of the housing 10 can also be configured in grooved form.

## Claims

1. Cooling device comprising a thermally insulated body (1); a housing (10) having two opposite lateral walls (100) provided within the body (1); first holding protrusions (3) configured on the lateral walls (100) in a mutually opposite manner so as to accommodate a compartment (2) settling into the housing (10), **characterized in that** it comprises at least one groove (321),
- which is configured on a backing part (32) in which the periphery of the planar section (31) of the first holding protrusion (3) is connected to the lateral wall (100) at both ends (33),
- which extends in a direction substantially perpendicular to the lateral wall (100),
- and which is bounded by cross-ties (322), wherein the cross-ties (322) extend from the lateral wall (100) to a free edge of the planar section (31) of the D-shaped holding protrusion (3), wherein the planar section (31) is formed in an upper part of the holding protrusion (3) and is the portion being in contact while carrying the compartment (2),.

2. Cooling device according to claim 1, wherein the groove (321) is in the portion of the backing part (32) close to its end (33).

3. Cooling device according to anyone of the preceding claims, wherein the edges of the first holding protrusion (3) are radiused.

4. Cooling device according to anyone of the preceding claims, wherein the grooves (321) configured in the backing part (32) of the first holding protrusion (3) are parallel to each other.

5. Cooling device according to anyone of the preceding claims, wherein the distance between the grooves (321) configured in the backing part (32) of the first holding protrusion (3) is equal to each other.

6. Cooling device according to anyone of the preceding claims, wherein the cross-ties (322) are S-shaped.

7. Cooling device according to anyone of the preceding claims, wherein the cross ties (322) extend in a direction substantially perpendicular to the lateral wall (100) and parallel to each other.

8. Cooling device according to anyone of the preceding claims, wherein a holding protrusion device (5) on a specific horizontal insertion plane for a compartment (2) comprises a first holding protrusion (3) and a second holding protrusion (6) on a lateral wall (100) which are separate parts, and which are positioned with a distance to each other, and consecutively in a row, especially the second holding protrusion (6) is preferred an oblong element, positioned closer to a back wall of the housing (10) than the first holding protrusion (3), and the first holding protrusion (3) is preferred short in comparison to the second holding protrusion (6) and is positioned close to a front edge of the housing (10).

9. Method for producing a cooling device according to claim 1, **characterized in that** it comprises the process steps of placing a plastic panel over the mold (4) so as to generate a first holding protrusion (3) form of the housing (10), molding the panel and then removing it from the mold (4) coaxially with the groove (321) extension direction so that at least one groove (321) is configured on a backing part (32) in which the periphery of the planar section (31) of the first holding protrusion (3) is connected to the lateral wall (100) at both ends (33), and said groove (321) extends in a direction substantially perpendicular to the lateral wall (100), wherein said groove (321) is bounded by cross-ties (322), which extend from the lateral wall to a free edge of the planar section (31) of the D-shaped holding protrusion (3), wherein the planar section (31) is formed in an upper part of the holding protrusion (3) and is the portion being in contact while carrying the compartment (2).

## Patentansprüche

1. Kühlvorrichtung mit einem thermisch isolierten Körper (1); einem Gehäuse (10) mit zwei gegenüberliegenden Seitenwänden (100), die in dem Körper (1) vorgesehen sind; ersten Haltevorsprüngen (3), die an den Seitenwänden (100) sich einander gegenüber liegend ausgeführt sind, um ein in dem Gehäuse (10) abgesetztes Fach (2) aufzunehmen, **dadurch gekennzeichnet, dass** sie zumindest eine Nut (321) umfasst,
- die an einem stützenden Teil (32) konfiguriert ist, wobei der Umfang des ebenen Abschnitts (31) des ersten Haltevorsprungs (3) an beiden Enden (33) mit der Seitenwand (100) verbunden ist,
- die sich in einer im Wesentlichen senkrecht zur Seitenwand (100) stehenden Richtung erstreckt, und
- die von Traversen (322) begrenzt ist, wobei sich die Traversen (322) von der Seitenwand (100) zur freien Kante des ebenen Abschnitts (31) des D-förmigen Haltevorsprungs (3) erstreckt, wobei der ebene Abschnitt (31) in einem oberen Teil des Haltevorsprungs (3) ausgebildet und das Teilstück ist, das beim Tragen des Faches (2) in Kontakt ist.

2. Kühlvorrichtung nach Anspruch 1, wobei sich die Nut (321) in dem Teilstück nahe dem Ende (33) des stützenden Teils (32) befindet.

3. Kühlvorrichtung nach einem der vorhergehenden Ansprüche, wobei die Kanten des ersten Haltevorsprungs (3) abgerundet sind.

4. Kühlvorrichtung nach einem der vorhergehenden Ansprüche, wobei die in dem stützenden Teil (32) des ersten Haltevorsprungs (3) konfigurierten Nuten (321) parallel zueinander verlaufen.

5. Kühlvorrichtung nach einem der vorhergehenden Ansprüche, wobei der Abstand zwischen den in dem stützenden Teil (32) des ersten Haltevorsprungs (3) konfigurierten Nuten (321) jeweils gleich ist.

6. Kühlvorrichtung nach einem der vorhergehenden Ansprüche, wobei die Traversen (322) S-förmig sind.

7. Kühlvorrichtung nach einem der vorhergehenden Ansprüche, wobei sich die Traversen (322) in einer im Wesentlichen senkrecht zur Seitenwand (100) stehenden Richtung und parallel zueinander erstrecken.

8. Kühlvorrichtung nach einem der vorhergehenden Ansprüche, wobei eine Haltevorsprungvorrichtung (5) auf einer speziellen horizontalen Einsetzebene für ein Fach (2) einen ersten Haltevorsprung (3) und einen zweiten Haltevorsprung (6) an einer Seitenwand (100) umfasst, welche getrennte Teile sind und beabstandet voneinander und hintereinander in einer Reihe angeordnet sind, wobei im Besonderen der zweite Haltevorsprung (6) vorzugsweise ein längliches Element ist, das näher an einer Rückwand des Gehäuses (10) als der erste Haltevorsprung (3) angeordnet ist, und der erste Haltevorsprung (3) im Vergleich zum zweiten Haltevorsprung (6) vorzugsweise kurz und nahe der Vorderkante des Gehäuses (10) angeordnet ist.

9. Verfahren zur Fertigung einer Kühlvorrichtung nach Anspruch 1, **dadurch gekennzeichnet, dass** es die folgenden Prozessschritte umfasst: Platzieren einer Kunststoffplatte auf der Form (4) zur Erzeugung einer ersten Form des Haltevorsprungs (3) des Gehäuses (10), Formen der Platte und anschließend Entnehmen von der Form (4) koaxial zu der Richtung, in der sich die Nut (321) erstreckt, so dass zumindest eine Nut (321) an einem stützenden Teil (32) konfiguriert wird, wobei der Umfang des ebenen Abschnitts (31) des ersten Haltevorsprungs (3) an beiden Enden (33) mit der Seitenwand (100) verbunden ist und sich die Nut (321) in einer im Wesentlichen senkrecht zur Seitenwand (100) stehenden Richtung erstreckt, wobei die Nut (321) von Traversen (322) begrenzt wird, die sich von der Seitenwand zu einer freien Kante des ebenen Abschnitts (31) des D-förmigen Haltevorsprungs (3) erstrecken, wobei der ebene Abschnitt (31) in einem oberen Teil des Haltevorsprungs (3) ausgebildet und das Teilstück ist, das beim Tragen des Fachs (2) in Kontakt ist.

## Revendications

1. Appareil frigorifique comprenant une carcasse isolée thermiquement (1) ; un logement (10) possédant deux parois latérales opposées (100) prévues à l'intérieur de la carcasse (1) ; de premières protrusions de maintien (3) exécutées sur les parois latérales (100) de façon mutuellement opposée de sorte à accueillir un compartiment (2) s'installant dans le logement (10), **caractérisé en ce qu'**il comprend au moins une gorge (321),
- exécutée sur une partie de support (32) dans laquelle la périphérie de la section plane (31) de la première protrusion de maintien (3) est connectée à la paroi latérale (100) aux deux extrémités (33),
- qui s'étend dans une direction essentiellement perpendiculaire à la paroi latérale (100),
- et qui est limitée par des traverses (322), dans lequel les traverses (322) s'étendent de la paroi latérale (100) à un bord libre de la section plane (31) de la protrusion de maintien en forme de D (3), dans lequel la section plane (31) est formée dans une partie supérieure de la protrusion de maintien (3) et est la partie en contact durant le support du compartiment (2).

2. Appareil frigorifique selon la revendication 1, dans lequel la gorge (321) est dans la zone de la partie de support (32) proche de son extrémité (33).

3. Appareil frigorifique selon l'une quelconque des revendications précédentes, dans lequel les bords de la première protrusion de maintien (3) sont arrondis.

4. Appareil frigorifique selon l'une quelconque des revendications précédentes, dans lequel les gorges (321) configurées dans la partie de support (32) de la première protrusion de maintien (3) sont parallèles l'une à l'autre.

5. Appareil frigorifique selon l'une quelconque des revendications précédentes, dans lequel la distance entre les gorges (321) configurées dans la partie de support (32) de la première protrusion de maintien (3) est identique.

6. Appareil frigorifique selon l'une quelconque des revendications précédentes, dans lequel les traverses (322) sont en forme de S.

7. Appareil frigorifique selon l'une quelconque des revendications précédentes, dans lequel les traverses (322) s'étendent selon une direction essentiellement perpendiculaire à la paroi latérale (100) et parallèlement l'une à l'autre.

8. Appareil frigorifique selon l'une quelconque des revendications précédentes, dans lequel un dispositif de protrusion de maintien (5) sur un plan d'insertion horizontal spécifique pour un compartiment (2) comprend une première protrusion de maintien (3) et une deuxième protrusion de maintien (6) sur une paroi latérale (100), sous la forme de pièces séparées positionnées à distance l'une de l'autre, et consécutivement en ligne, la deuxième protrusion de maintien (6) étant en particulier préférée sous la forme d'un élément oblong, positionné plus près d'une paroi arrière du logement (10) que la première protrusion de maintien (3) et la première protrusion de maintien (3) étant préférée courte comparativement à la deuxième protrusion de maintien (6) et positionnée à proximité d'un bord frontal du logement (10).

9. Procédé de production d'un appareil frigorifique selon la revendication 1, **caractérisé en ce qu'**il comprend les étapes de placement d'un panneau en plastique sur le moule (4) de sorte à constituer une première forme de protrusion de maintien (3) du logement (10), moulage du panneau et ensuite retrait de celui-ci du moule (4) coaxialement à la direction d'extension de la rainure (321) de sorte qu'au moins une gorge (321) soit configurée sur une partie de support (32) dans laquelle la périphérie de la section plane (31) de la première protrusion de maintien (3) est connectée à la paroi latérale (100) aux deux extrémités (33), et ladite gorge (321) s'étend dans une direction essentiellement perpendiculaire à la paroi latérale (100), dans lequel ladite gorge (321) est limitée par des traverses (322), qui s'étendent de la paroi latérale à un bord libre de la section plane (31) de la protrusion de maintien en forme de D (3), dans lequel la section plane (31) est formée dans une partie supérieure de la protrusion de maintien (3) et est la partie en contact durant le support du compartiment (2).
